# EUROPEAN PATENT APPLICATION

(11) **EP 2 495 629 A1**
(43) Date of publication of application: **05.09.2012**
(21) Application number: 10826666.9
(22) Date of filing: 25.10.2010
(51) Int. Cl.: G05B 19/418, G05B 23/02, G07C 3/02

(54) **EQUIPMENT STATE DETECTION APPARATUS, EQUIPMENT STATE DETECTION METHOD, AND COMPUTER-READABLE RECORDING MEDIUM**

(30) Priority: 30.10.2009 JP 2009250491; 27.09.2010 JP 2010215109
(71) Applicant: Omron Corporation, Kyoto-shi, Kyoto 600-8530 (JP)
(72) Inventor: TAKIGUCHI, Hideaki, Kyoto-shi Kyoto 600-8530 (JP); MISUMI, Shuichi, Kyoto-shi Kyoto 600-8530 (JP); YAMAMURA, Kenji, Kyoto-shi Kyoto 600-8530 (JP)
(74) Representative: Wilhelms · Kilian & Partner Patentanwälte
(86) International application number: PCT/JP2010/068842
(87) International publication number: WO 2011/052534

(57) **Abstract**

When a plate material reaches a support part, a press machine outputs a start signal to move a press part downward. An input receiving unit receives input of the start signal (S11). A detection unit detects that the press machine is in an operating state (S12). When the press machine moves the press part upward, and shaping of the plate material ends, the press machine outputs a standby signal. The input receiving unit receives input of the standby signal (NO in S11, YES in S13). The detection unit detects that the press machine is in a standby state (S14). When the plate material is again conveyed onto a roller conveyer from the support part, the press machine outputs a stop signal. The input receiving unit receives input of the stop signal (NO in S11, NO in S13). The detection unit detects that the press machine is in a stop state (S15).

## Description

### Technical Field

This invention relates to an equipment state detection apparatus, an equipment state detection method and a computer-readable recording medium, and particularly to an equipment state detection apparatus, an equipment state detection method and a computer-readable recording medium for use in equipment holding a plurality of operation states.

### Background Art

Equipment made up of a press machine and the like has a plurality of operation states. For example, there are an operating state where operation is performed to a member to be pressed, and a standby state where the member to be pressed is waited for until the member to be pressed becomes ready. For example, Japanese Patent Application Laid-Open No. 2001-52221 (PTL 1) discloses an apparatus that detects the operation states of the equipment by measuring a physical amount in each of the operation states of the equipment.

According to PTL 1, the apparatus includes an integrating wattmeter, and measures an integrated value of electric power consumed by the equipment as the physical amount, for example, every 10 minutes. A difference between the two measured integrated values of electric power is computed by a processor to find average electric energy. Thereby, which detection allowance width of the operation state the found average electric energy falls within is determined to thereby detect the operation state of the equipment.

### Citation List

### Patent Literature

PTL 1: Japanese Patent Application Laid-Open No. 2001-52221 (paragraph numbers 0021 to 0023 and the like)

### Summary of Invention

### Technical Problem

Here, in the apparatus disclosed in PTL 1, the average electric energy is found to thereby detect the operation state of the equipment. Accordingly, for detecting the operation state of the equipment, the computation of the difference between the two integrated values of electric power measured by the processor and the like need to be performed.

Moreover, in the apparatus disclosed in PTL 1, the measured integrated values of electric power are stored in an auxiliary storage device to report to an equipment administer as a daily report or a monthly report. Here, situations surrounding the equipment change from hour to hour, which makes it difficult to address the change, using the reports.

An object of this invention is to provide an equipment state detection apparatus that can precisely detect an operation state of equipment in a simple method.

Another object of this invention is to provide an equipment state detection method that enables the operation state of the equipment to be precisely detected in the simple method.

Still another object of this invention is to provide a computer-readable recording medium that records an equipment state detection program that enables the operation state of the equipment to be precisely detected in a simple method.

### Solution to Problem

An equipment state detection apparatus according to this invention is an equipment state detection apparatus that can detect an operation state of equipment, the operation state of the equipment having an operating state in which operation is being performed, and a non-operating state in which the operation is not being performed, the equipment state detection apparatus including acquisition means for acquiring real-time state data regarding the operation state of the equipment, first detection means for detecting that the equipment is in the operating state, based on the state data acquired by the acquisition means, and second detection means for detecting that the equipment is in the non-operating state, based on the state data acquired by the acquisition means.

The equipment state detection apparatus acquires the real-time state data regarding the operation state of the equipment to detect the operation state of the equipment, based on the acquired state data. Accordingly, the detection of the operation state of the equipment can be based on the real-time state data. In this case, a difference of the state data need not be computed and so on. As a result, the operation state of the equipment can be precisely detected in a simple method,

Moreover, for example, when the operation state of the equipment is reported, the report can be based on the real-time state data.

Moreover, for example, the equipment state detection apparatus is connected to the server through the network, and when the operation state of the equipment is notified to the server, the data based on the real-time state data can be notified.

The acquisition means includes a start signal receiving means for receiving input of a start signal outputted by the equipment when the work is started, and end signal receiving means for receiving input of an end signal outputted by the equipment when the work ends, the first detection means detects that the equipment is in the operating state by the start signal received by the start signal receiving means, and the second detection means detects that the equipment is in the non-operating state by the end signal received by the end signal receiving means. This enables the operation state to be precisely detected only by determining the signal outputted by the equipment at the time of work.

More preferably, the non-operating state includes a standby state in which the work stands by, and a stop state in which the work stops, the end signal receiving means includes standby signal receiving means for receiving input of a standby signal outputted by the equipment when the work stands by, and stop signal receiving means for receiving input of a stop signal outputted by the equipment when the work stops, and the second detection means detects that the equipment is in the standby state by the standby signal received by the standby signal receiving means, and detects that the equipment is in the stop state by the stop signal received by the stop signal receiving means. This enables the operation state of the equipment to be classified and detected in detail.

More preferably, the acquisition means includes measurement means for measuring a physical amount varying in accordance with the operation state of the equipment, and setting means for setting a predetermined threshold, and when the detection means is disabled to acquire at least any one of the start signal and the end signal, the detection means compares the physical amount measured by the measurement means with the predetermined threshold set by the setting means to detect the operation state of the equipment. This enables the operation state of the equipment to be easily detected, using the measured physical amount, even if the acquisition of the signal is disabled.

More preferably, the acquisition means includes measurement means for measuring a physical amount varying in accordance with the operation state of the equipment, and setting means for setting a predetermined threshold, and the detection means compares the physical amount measured by the measurement means with the predetermined threshold set by the setting means to detect the operation state of the equipment. This enables the operation state of the equipment to be easily detected only by comparing the physical amount with the predetermined threshold.

More preferably, the physical amount includes statistics converted based on the physical amount. This enables the operation state of the equipment to be detected, based on the various types of data.

The physical amount varies periodically, and the detection means includes determination means for comparing a waveform of a first cycle and a waveform of a second cycle different from the first cycle to determine whether or not a difference in waveform is within a predetermined range. This enables abnormality or the like of the equipment to be detected in accordance with the operation state of the equipment.

Preferably, the detection means compares the waveform in the operating state in the waveform of the first cycle, and the waveform in the operating state in the waveform of the second cycle. This enables damage and abrasion of the equipment when the equipment is in the operating state, change in situation to the equipment unintended to the user using the equipment or the like to be detected with ease.

The equipment state detection apparatus can be connected to a server through a network, and the equipment state detection apparatus includes integration means for collecting the operation state of the equipment detected by the detection means, and notification means for notifying the operation state of the equipment collected by the integration means to the server at predetermined timing.

Here, conventionally, when the data is acquired in detail as an integrating wattmeter for machinery equipment, setting is made so as to output a pulse signal every unit integrated value of electric power such as 1 wh (watt-hour), which makes a sampling cycle short, and increases communication frequency to the server. Consequently, there is a possibility that abnormality of the communication line and the like are caused.

On the other hand, conventionally, the measured integrated values of electric power are stored in an auxiliary storage device to thereby collect the data and report the same to an equipment administer as a daily report or a monthly report. Here, since situations surrounding the equipment change from hour to hour, the reports are not sufficient.

However, the above-described configuration enables the operation state of the equipment to be notified at predetermined timing. The predetermined timing is, for example, a predetermined time interval, an operation cycle of the equipment or the like, which is arbitrary timing in accordance with the convenience of the user such as an equipment administer and the like. This enables the operation state of the equipment to be notified in accordance with the convenience of the user. Moreover, in this case, in place of outputting the merely pulse signal, the operation data indicating the operation state of the equipment is collected to be notified, which can suppress an amount of data communicated to the server, even when the sampling cycle becomes shorter. Accordingly, even when a number of pieces of the equipment to be detected and the like are large, and a scale is large in a factory or the like where the equipment is installed or the like, stable notification to the server is enabled. Moreover, in terms of energy saving, the present invention is effective.

Another aspect of this invention relates to an equipment state detection method enabling an operation state of equipment to be detected. The operation state of the equipment has an operating state in which operation is being performed, and a non-operating state in which the work is not being performed, and the equipment state detection method includes the steps of acquiring real-time state data regarding the operation state of the equipment, detecting that the equipment is in the operating state, based on the acquired state data, and detecting that the equipment is in the non-operating state, based on the acquired state date.

In the equipment state detection method, the real-time state data regarding the operation state of the equipment is acquired, and the operation state of the equipment is detected, based on the acquired state data. Accordingly, the detection of the operation state of the equipment can be based on the real-time state data. In this case, the difference of the state data need not be computed and so on. As a result, in a simple method, the operation state of the equipment can be precisely detected.

Still another aspect of this invention relates to a computer-readable recording medium that records an equipment state detection program that causes a computer to be actuated as an equipment state detection apparatus that can detect an operation state of equipment. The equipment state detection program causes the computer to execute the steps of acquiring real-time state data regarding the operation state of the equipment including an operating state in which operation is being performed, and a non-operating state in which the work is not being performed, detecting that the equipment is in the operating state, based on the acquired state data, and detecting that the equipment is in the non-operating state, based on the acquired state data.

The computer-readable recording medium that records the equipment state detection program causes the computer to be actuated as the equipment state detection apparatus by the program, and to acquire the real-time state data regarding the operation state of the equipment to detect the operation state of the equipment, based on the acquired state data. Accordingly, the detection of the operation state of the equipment can be based on the real-time state data. In this case, the difference of the state data need not be computed and so on. As a result, in a simple method, the operation state of the equipment can be caused to be precisely detected.

### Advantageous Effects of Invention

The equipment state detection apparatus according to this invention acquires the real-time state data regarding the operation state of the equipment to detect the operation state of the equipment, based on the acquired state data. Accordingly, the detection of the operation state of the equipment can be based on the real-time state data. In this case, the difference of the state data need not be computed and so on. As a result, in a simple method, the operation state of the equipment can be precisely detected.

Moreover, for example, when the operation state of the equipment is reported, the report can be based on the real-time state data.

Moreover, for example, the equipment state detection apparatus is connected to the server through the network, and when the operation state of the equipment is notified to the server, the data based on the real-time state data can be notified.

Moreover, in the equipment state detection method according to this invention, the real-time state data regarding the operation state of the equipment is acquired, so that the operation state of the equipment is detected, based on the acquired state data. Accordingly, the detection of the operation state of the equipment can be based on the real-time state data. In this case, the difference of the state data need not be computed and so on. As a result, in a simple method, the operation state of the equipment can be precisely detected.

Moreover, the computer-readable recording medium that records the equipment state detection program according to this invention causes the computer to be actuated as the equipment state detection apparatus by the program, and to acquire the real-time state data regarding the operation state of the equipment to detect the operation state of the equipment, based on the acquired state data. Accordingly, the detection of the operation state of the equipment can be based on the real-time state data. In this case, the difference of the state data need not be computed and so on. As a result, in a simple method, the operation state of the equipment can be caused to be precisely detected.

### Brief Description of Drawings

[Fig. 1] Fig. 1 is a perspective diagram showing an equipment state detection apparatus according to one embodiment of this invention.
[Fig. 2] Fig. 2 is a block diagram showing a configuration of the equipment state detection apparatus.
[Fig. 3] Fig. 3 is a diagram showing a case where the equipment state detection apparatus is attached to a press machine.
[Fig. 4] Fig. 4 is a flowchart showing a case where an operation state of the press machine is detected, utilizing the equipment state detection apparatus.
[Fig. 5] Fig. 5 is a diagram showing change in operation state of the press machine.
[Fig. 6] Fig. 6 is a block diagram showing a configuration of an equipment state detection apparatus according to another embodiment of this invention.
[Fig. 7] Fig. 7 is a diagram showing a case where the equipment state detection apparatus is attached to a wattmeter.
[Fig. 8] Fig. 8 is a flowchart showing a case where the operation state of the press machine is detected, utilizing the equipment state detection apparatus.
[Fig. 9] Fig. 9 is a graph showing power consumption of the press machine.
[Fig. 10] Fig. 10 is a block diagram showing a case where a waveform determining unit is added to a control unit in the equipment state detection apparatus shown in the embodiment in Fig. 6.
[Fig. 11] Fig. 11 is a block diagram showing a case where a notification unit and a collection unit are added to the control unit in equipment state detection apparatus shown in the embodiment in Fig. 6.
[Fig. 12] Fig. 12 is a block diagram showing a configuration of the equipment state detection apparatus that uses a signal and measures electric energy as well.
[Fig. 13] Fig. 13 is a flowchart showing a case where the electric energy is measured to detect the operation state of the equipment when the acquirement of the signal from the equipment is disabled.

### Description of Embodiments

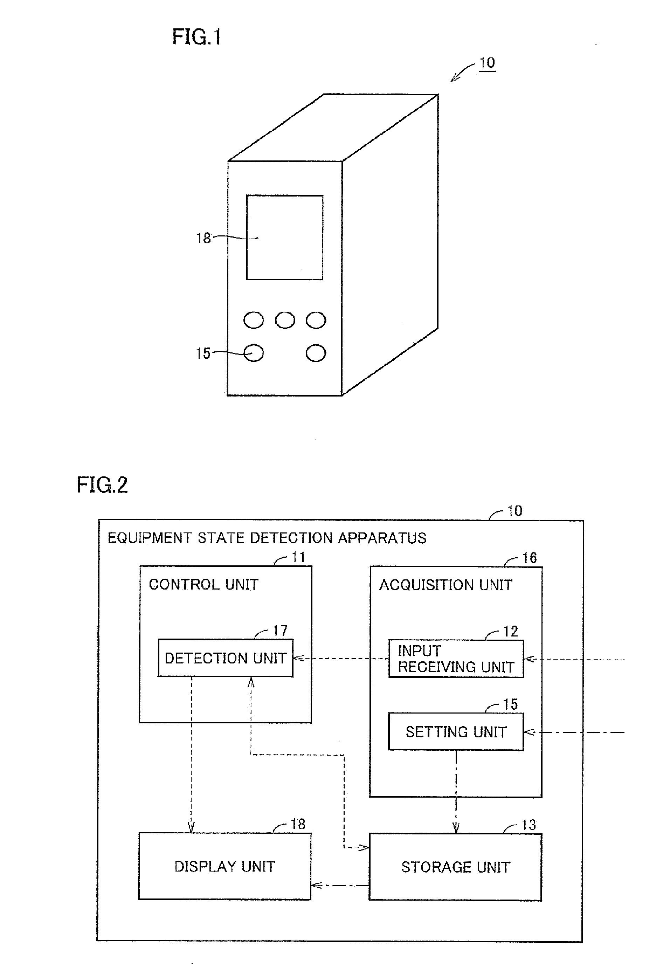

Hereinafter, an equipment state detection apparatus according to one embodiment of this invention will be described with reference to the drawings. Fig. 1 is a perspective diagram showing an equipment state detection apparatus 10 according to the one embodiment of this invention. Fig. 2 is a block diagram showing a configuration of the equipment state detection apparatus 10. Referring to Figs. 1 and 2, the equipment state detection apparatus 10 is attached to equipment such as a working machine or the like to detect an operation state of the equipment. The operation state includes an operating state where operation is being performed, a non-operating state where the work is not being performed. The non-operating state includes a stop state where the work stops, and a standby state where the work stands by. The equipment state detection apparatus 10 has a square column shape, and includes a control unit 11 that controls the whole of the equipment state detection apparatus 10, an acquisition unit 16 that acquires predetermined data from outside, a storage unit 13 that stores data acquired by the acquisition unit 16 and the like, and a display unit 18 that displays the data and the like stored in the storage unit 13 and the like.

The control unit 11 includes a detection unit 17 that detects the operation state of the equipment, based on the data acquired by the acquisition unit 16. The acquisition unit 16 is connected to a logical terminal of the equipment, and includes an input receiving unit 12 that receives input of a state signal from the equipment, and a setting unit 15 that has operation buttons and the like to receive input of operation to the equipment state detection apparatus 10 from a user. The display unit 18 can display characters including numeric characters and alphabets. Moreover, the display unit 18 can display symbols such as a circle, a triangle and the like. The respective operation states of the equipment are displayed in different colors, integration time and the like of the respective operation states of the equipment are displayed, contents operated by the user through the setting unit 15 are displayed, and an error and the like when the equipment state detection apparatus 10 is attached to the equipment are displayed. This enables the user to visually confirm information held by the equipment state detection apparatus 10 with ease.

Arrows with dotted lines in Fig. 2 show a flow of the state signal, and arrows with alternate long and short dashed line show a flow of a signal in the operation received from the user.

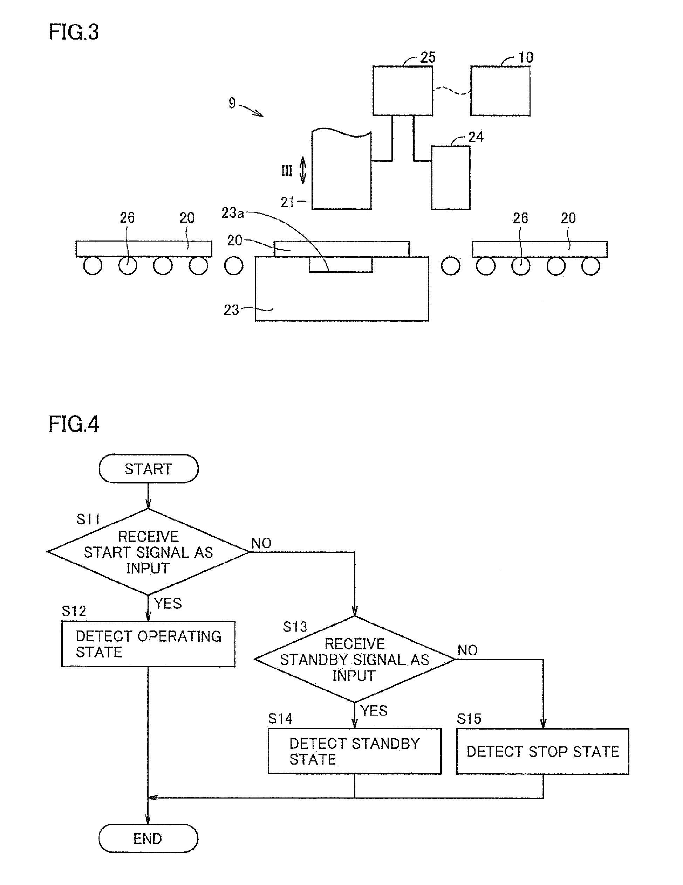

Here, a case where the equipment state detection apparatus 10 is attached to a press machine will be described. Fig. 3 is a diagram showing a case where the equipment state detection apparatus 10 is attached to a press machine 9. Referring to Fig. 3, the press machine 9 will be described.

The press machine 9 is connected to, for example, a roller conveyer 26 and the like to shape a plate material 20 or the like conveyed by the roller conveyer 26. When the shaping ends, the plate material 20 is again conveyed on the roller conveyer 26. In Fig. 3, the conveyance direction of the plate material 20 is a direction from left to right. The press machine 9 includes a support part 23 on which the plate material 20 is placed to support the plate material 20, a press part 21 that presses a predetermined position of the plate material 20 supported by the support part 23, a sensor 24 that detects that the plate material 20 is removed from the support part 23, and a control part 25 having a power supply as a supply source of power to actuate the press machine 9, a motor as a drive source of the press part 21, input terminals as interfaces with outside, and the like. The equipment state detection apparatus 10 is attached to the control part 25. The operation state of the press machine 9 is detected.

The support part 23 is provided with a depressed portion 23a having a predetermined shape, and the plate material 20 is placed so as to cover the depressed portion 23a.

The press part 21 is connected to the control part 25 through the input terminal, so that vertical movement is enabled as shown in an arrow III in Fig. 3 by rotation of the motor of the control part 25. When the press part 21 moves downward, it presses the position of the plate material 20 corresponding to the depressed portion 23a. This allows the press machine 9 to make the plate material 20 into the predetermined shape.

The sensor 24 is, for example, a photoelectric sensor, and is connected to the control part 25 through the input terminal to notify a detection result. Specifically, the sensor 24 detects that the plate material 20 is conveyed from the support part 23 onto the roller conveyer 26, and notifies the control part 25 of this.

The control part 25 controls the whole of the press machine 9. For example, the control part 25 controls the number of rotations of the motor, and controls power-on to actuate the press machine 9, power-off and the like. When the power is turned on, the rotation of the motor is started, while when the power is turned off, the rotation of the motor is stopped.

Moreover, the control part 25 outputs the state signal to the equipment state detection apparatus 10. As the state signal, a start signal and an end signal are outputted. The start signal is a signal outputted when the press machine 9 starts the operation, and specifically, a signal outputted when the press part 21 starts downward motion. The end signal is a signal outputted when the press machine 9 ends the operation, and includes a standby signal and a stop signal. The standby signal is a signal outputted when the press part 21 ends upward motion. The stop signal is a signal outputted when the stop is notified from the sensor 24, that is, a signal outputted when the plate material 20 is conveyed from the support part 23 onto the roller conveyer 26.

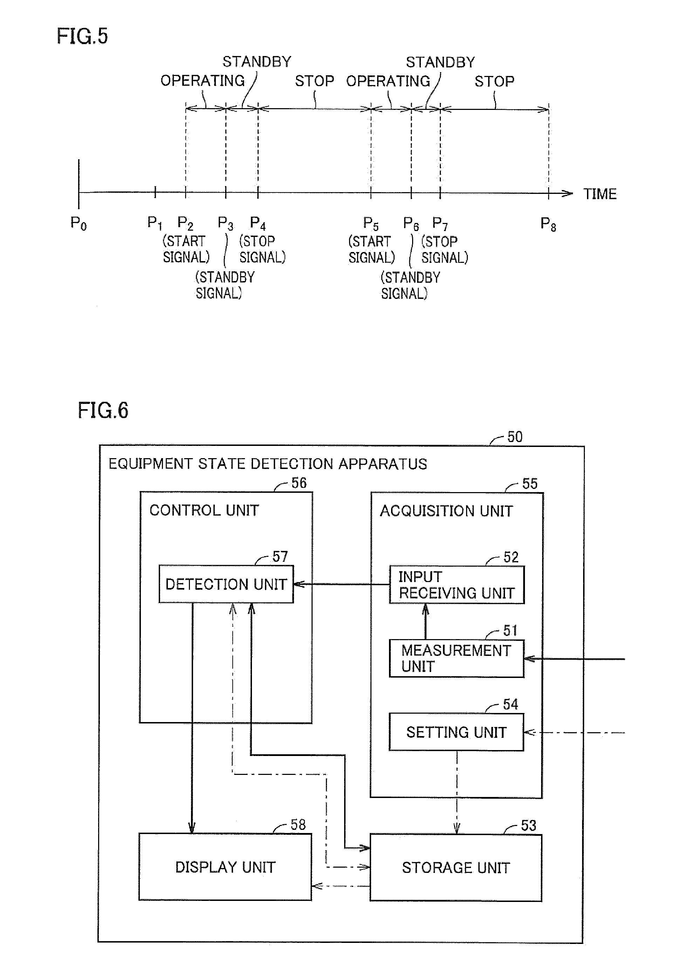

Here, a case where the operation state of the press machine 9 is detected, utilizing the equipment state detection apparatus 10 will be described. Fig. 4 is a flowchart showing the case where the operation state of the press machine 9 is detected, utilizing the equipment state detection apparatus 10. Fig. 5 is a diagram showing change in the operation state of the press machine 9. Referring to Figs. 1 to 5, a description will be given.

First, at a point of P₀ in Fig. 5, the press machine 9 is powered on, and at a point of P₁ in Fig. 5, the plate material 20 is conveyed to the press machine 9 by the roller conveyer 26.

When the plate material 20 reaches the support part 23, the press machine 9 outputs the start signal to move the press part 21 downward. Here, the input receiving unit 12 receives the input of the start signal (YES in step S11 in Fig. 4, hereinafter, the term of step will be omitted). This allows the equipment state detection apparatus 10 to acquire real-time state data regarding the operation state of the press machine 9. That is, the state signal from the press machine 9 is the state data regarding the operation state of the press machine 9. Here, the input receiving part 12 is actuated as start signal receiving means. The acceptance of the start signal allows the detection unit 17 to detect that the operation state of the press machine 9 is the operating state (S12). The operating state is a state where the press part 21 is moved and the plate material 20 is being shaped. Here, the detection unit 17 is actuated as first detection means. At this time, time indicates a point of P₂ in Fig. 5.

When the press part 21 is moved upward to end the machining of the plate material 20, the press machine 9 outputs the standby signal. Here, the input receiving unit 12 receives the input of the standby signal (NO in S11, YES in S13). Here, the input receiving unit 12 is actuated as standby signal receiving means of end signal receiving means. Consequently, the detection unit 17 detects that the operation state of the press machine 9 is in the standby state (S14). The standby state is, for example, a state where although the plate material 20 is placed on the support part 23, the operation of the press part 21 ends, and the machining of the plate material 20 is not being performed. Here, the detection unit 17 is actuated as second detection means. At this time, the time indicates a point of P₃ in Fig. 5.

When the plate material 20 is again conveyed from the support part 23 onto the roller conveyer 26, the press machine 9 outputs the stop signal. Here, the input receiving unit 12 receives the input of the stop signal (NO in S11, NO in S13). Here, the input receiving unit 12 is actuated as stop signal receiving means of the end signal receiving means. Consequently, the detection unit 17 detects that the operation state of the press machine 9 is in the stop state (S15). The stop state is, for example, a state where the plate material 20 is not placed on the support part 23, and the machining of the plate material 20 is not being performed. Here, the detection unit 17 is actuated as the second detection means. At this time, the time indicates a point of P₄ in Fig. 5.

The plurality of plate materials 20 are sequentially conveyed to the press machine 9 at predetermined intervals. Consequently, the start signal, the standby signal, and the stop signal are outputted every time the machining of the plate material 20 is performed as shown in Fig. 5, and the operating state, the standby state, and the stop state periodically shift.

In this manner, the equipment state detection apparatus 10 acquires the real-time state data regarding the operation state of the equipment to detect the operation state of the equipment, based on the acquired state data. Accordingly, the detection of the operation state of the equipment can be based on the real-time state data. In this case, a difference of the state data need not be computed and so on. As a result, in a simple method, the operation state of the equipment can be precisely detected.

That is, in the embodiment, once the state signal is outputted from the equipment, the equipment state detection apparatus 10 maintains the same operation state until the next state signal is outputted. Accordingly, the detection of the operation state of the equipment complies with only the change of the signal, and the real-time state data is data of only when the signal is changed. That is, in this embodiment, the real time is time based on only the change of the signal outputted from the equipment, and time when the operating state, the standby state, and the stop state can be distinguished only by the signal outputted from the equipment. The real-time state data is the current state data of the equipment.

Moreover, in the equipment state detection method, the real-time state data regarding the operation state of the equipment is acquired to detect the operation state of the equipment, based on the acquired state data. Accordingly, the detection of the operation state of the equipment can be based on the real-time state data. In this case, the difference of the state data need not be computed and so on. As a result, in a simple method, the operation state of the equipment can be precisely detected.

Moreover, a computer-readable recording medium that records the equipment-state detection program causes a computer to be actuated as the equipment-state detection apparatus by the program, and to acquire the real-time state data regarding the operation state of the equipment to detect the operation state of the equipment, based on the acquired state data. Accordingly, the detection of the operation state of the equipment can be based on the real-time state data. In this case, the difference of the state data need not be computed and so on. As a result, in a simple method, the operation state of the equipment can be caused to be precisely detected.

Moreover, in this embodiment, only determining the signal outputted when the press machine 9 works enables the operation state to be precisely detected. This can be effectively utilized, particularly, in the case where change in power consumption measured in a measurement unit 51, which is an embodiment described later, is small, and the like.

Moreover, in this embodiment, the standby state and the stop state as the non-operating state can be detected, and the operation state of the equipment can be classified in detail to be detected.

While in the embodiment, the case where the input of the start signal, the standby signal, and the stop signal is received has been described, the present invention is not limited thereto, but the input may be received in accordance with a signal outputted by the press machine 9. For example, the roller conveyer 26 may output a signal, so that the roller conveyer 26 may output the operating signal when the roller conveyer 26 is operated, thereby receiving the input, and may output the stop signal when the roller conveyer 26 is stopped, thereby receiving the input. Moreover, in the press machine 9, a sensor that detects that the plate material 20 is placed on the support part 23 may be provided, and the sensor may notify the control part 25 of a detection result, thereby receiving the input.

Next, another embodiment of this invention will be described. Fig. 6 is a block diagram showing a configuration of an equipment state detection apparatus 50 according to another embodiment of this invention. Referring to Fig. 6, the equipment state detection apparatus 50 includes the measurement unit 51 in an acquisition unit 55 as a different point from the embodiment. The measurement unit 51 measures the power consumption of the equipment with the equipment state detection apparatus 50 attached thereto. Specifically, the power consumption of the equipment is measured at the predetermined intervals, for example, at intervals of 1 second. This enables the power consumption of the equipment to be measured in detail. Here, the measurement unit 51 is actuated as measurement means. Moreover, an input receiving unit 52 receives the input of data of the power consumption measured by the measurement unit 51. A setting unit 54 receives setting of a first threshold and a second threshold from the user. Here, the setting unit 54 is actuated as setting means. A storage unit 53 stores the data of the power consumption measured by the measurement unit 51. Moreover, the storage unit 53 stores the first threshold and the second threshold set through the setting unit 54 as predetermined thresholds. The first threshold and the second threshold indicate predetermined electric power values, which are references to detect the operation state of the equipment. A display unit 58 displays the data of the power consumption, and displays the thresholds through a control unit 56.

Since other configurations are similar to those of the embodiment, descriptions thereof are not reiterated.

Solid arrows in Fig. 6 show a flow of the data of the power consumption, and alternate long and short dashed line arrows show a flow of a signal in the operation received from the user.

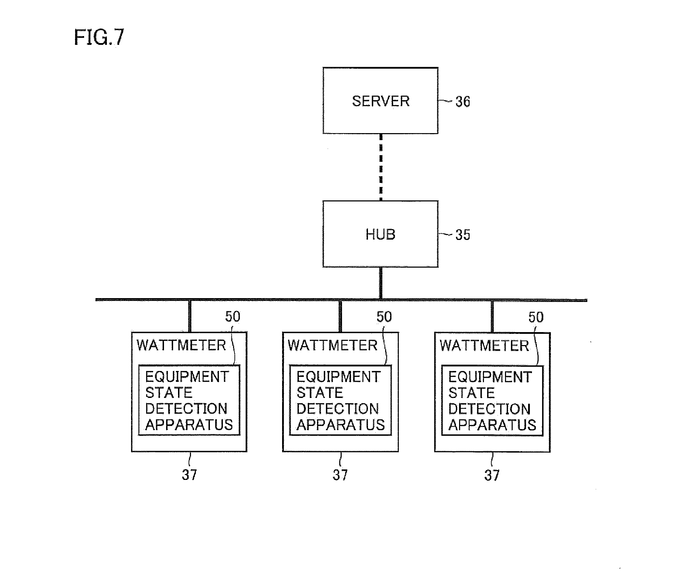

Now, a case where the equipment state detection apparatus 50 is attached to a wattmeter will be described. Fig. 7 is a diagram showing the case where the equipment state detection apparatus 50 is attached to a wattmeter 37. Referring to Fig. 7, the wattmeter 37 will be described.

The wattmeter 37 is attached to, for example, the control part 25 of the press machine 9 to measure the power consumption of the press machine 9. Specifically, the wattmeter 37 has a terminal or the like, which is an interface with outside, to measure the power consumption of the press machine 9. The plurality of wattmeters 37 are connected to a hub 35 via communication lines such as, for example, RS-485 and the like. The equipment state detection apparatus 50 is attached to each of the wattmeters 37 to detect the operation state of each of the plurality of press machines 9. The hub 35 is connected to a server 36, for example, via a communication line such as Ethernet (registered trademark) and the like. The server 36 is administered, for example, by the users utilizing the equipment state detection apparatuses 50.

The measurement unit 51 measures the power consumption, making up a part of the wattmeter 37.

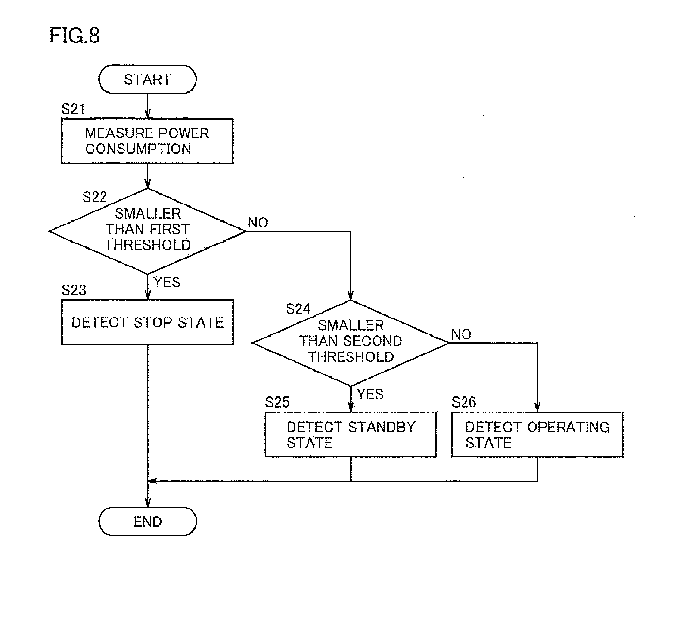

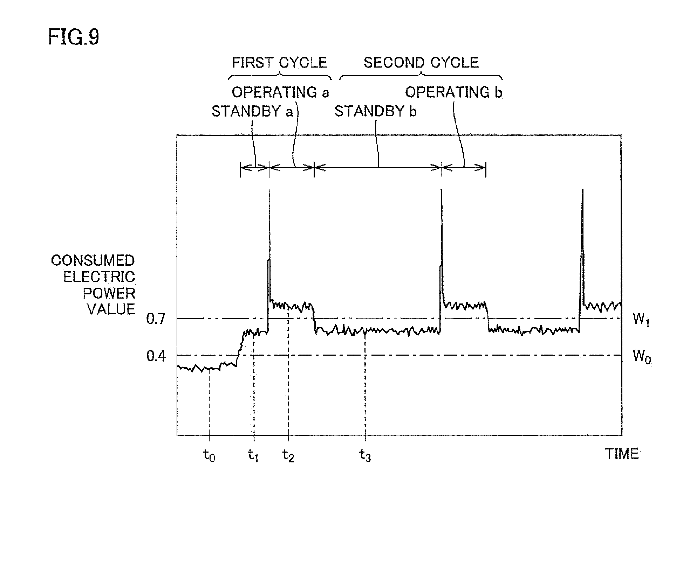

Here, a case where the operation state of the press machine 9 is detected, utilizing the equipment state detection apparatus 50 will be described. Fig. 8 is a flowchart showing the case where the operation state of the press machine 9 is detected, utilizing the equipment state detection apparatus 50. Fig. 9 is a graph showing the power consumption of the press machine 9. In the graph, a first threshold w₀ is indicated by an alternate long and short dashed line, and a second threshold w₁ is indicated by an alternate long and two short dashed line. In this embodiment, the first threshold w₀ is 0.4 kw and the second threshold w₁ is 0.7 kw. Referring to Figs. 6 to 9, a description will be given.

First, the press machine 9 is powered on. Consequently, the measurement unit 51 starts the measurement of the power consumption, for example, at intervals of 1 second as the predetermined intervals (S21), the input receiving unit 52 receives the input of the data of the measured power consumption. This allows the equipment state detection apparatus 50 to acquire the real-time state data regarding the operation state of the press machine 9. That is, the data of the power consumption of the press machine 9 is the state data regarding the operation state of the press machine 9. The measurement unit 51 is actuated as acquisition means. One of pieces of data of the measured power consumption is indicated by to in Fig. 9, which is 0.3 kw.

Consequently, a detection unit 57 compares the data of the power consumption with the first threshold value w₀. If it is determined that the data of the power consumption is smaller than the first threshold w₀ (YES in S22), the operation state of the press machine 9 is detected as the stop state (S23). The stop state is, for example, a state immediately after the press machine 9 is powered on, where the plate material 20 has not been conveyed by the roller conveyer 26.

Next, the plate material 20 is conveyed to the press machine 9 by the roller conveyer 26. At this time, one of the pieces of data of the power consumption measured by the measurement unit 51 is indicated by t₁ in Fig. 9, which is 0. 6 kw.

Consequently, the detection unit 57 compares the data of the power consumption with the first threshold value w₀. If it is determined that the data of the power consumption is larger than the first threshold w₀ (NO in S22), the detection unit 57 compares the data of the power consumption with the second threshold w₁. If it is determined that the data of the power consumption is smaller than the second threshold w₁ (YES in S24), the operation state of the press machine 9 is detected as the standby state (S25). The standby state is, for example, a state where although the plate material 20 is conveyed by the roller conveyer 26, the plate material 20 has not reached the support part 23, and the operation of the plate material 20 is not being performed. The detection unit 57 is actuated as the second detection means.

When the plate material 20 reaches the support part 23, the press machine 9 moves the press part 21 downward. At this time, one of the pieces of data of the power consumption measured by the measurement unit 51 is indicated by t₂ in Fig. 9, which is 0.8 kw.

Consequently, the detection unit 57 compares the data of the power consumption with the first threshold value w₀. If it is determined that the data of the power consumption is larger than the first threshold w₀ (NO in S22), the detection unit 57 compares the data of the power consumption with the second threshold w₁. If it is determined that the data of the power consumption is larger than the second threshold w₁ (NO in S24), the operation state of the press machine 9 is detected as the operating state (S26). The operating state is a state where the press part 21 is moved and the plate material 20 is being machined. Here, the detection unit 57 is actuated as the first detection means.

The press machine 9 moves the press part 21 upward to end the operation of the plate material 20. At this time, one of the pieces of data of the power consumption measured by the measurement unit 51 is indicated by t₃ in Fig. 9, which is 0.6 kw.

Consequently, the detection unit 57 compares the data of the power consumption with the first threshold value w₀. If it is determined that the data of the power consumption is larger than the first threshold w₀ (NO in S22), the detection unit 57 compares the data of the power consumption with the second threshold w₁. If it is determined that the data of the power consumption is smaller than the second threshold w₁ (YES in S24), the operation state of the press machine 9 is detected as the standby state (S25).

In this manner, the equipment state detection apparatus 50 acquires the real-time state data regarding the operation state of the equipment to detect the operation state of the equipment, based on the acquired state data. That is, in this embodiment, the operation state of the equipment is detected, based on the data of the power consumption measured by the measurement unit 51. Accordingly, since the comparison of the data with the predetermined thresholds need only be performed, the operation state of the equipment can be detected with ease.

That is, in this embodiment, the equipment state detection apparatus 50 compares the data of the power consumption measured at the intervals of 1 second with the thresholds every time to detect the operation state of the equipment. Accordingly, the detection of the operation state of the equipment is performed regardless of the presence or absence of change in the operation state, and the real-time state data is data notified at the predetermined intervals each shorter than the duration of each of operation states regardless of the presence or absence of change in the operation state. That is, in this embodiment, the real time is time when the operating state, the standby state, and the stop state can be distinguished at intervals each shorter than the duration of each of the operation states of the equipment.

Moreover, even when the equipment state detection apparatuses are attached to the plurality of wattmeters 37, the detection of the operation state of each piece of the equipment can be based on the real-time state data.

The plurality of plate materials 20 are sequentially conveyed to the press machine 9 at predetermined intervals. This allows the data of the power consumption to periodically shift between the standby state and the operating state at every machining of the plurality of plate materials 20, as shown in Fig. 9.

In this case, change in the power consumption may be compared to detect the operation state of the press machine 9. Specifically, change in the power consumption during pressing of the first plate material, that is, a waveform of a first cycle in standby a and operating a in Fig. 9, and change in the power consumption during machining the second plate material, that is, a waveform of a second cycle in standby b and operating b in Fig. 9 are compared. It is determined whether or not the waveforms are the same. If the waveforms are the same, for example, it can be determined that quality of machined products by the press machine 9 is stable, and if the waveforms are different, it is determined that the quality fluctuates. As a result, abnormality such as a fatigued state, a load state and the like of the press machine 9 can be detected.

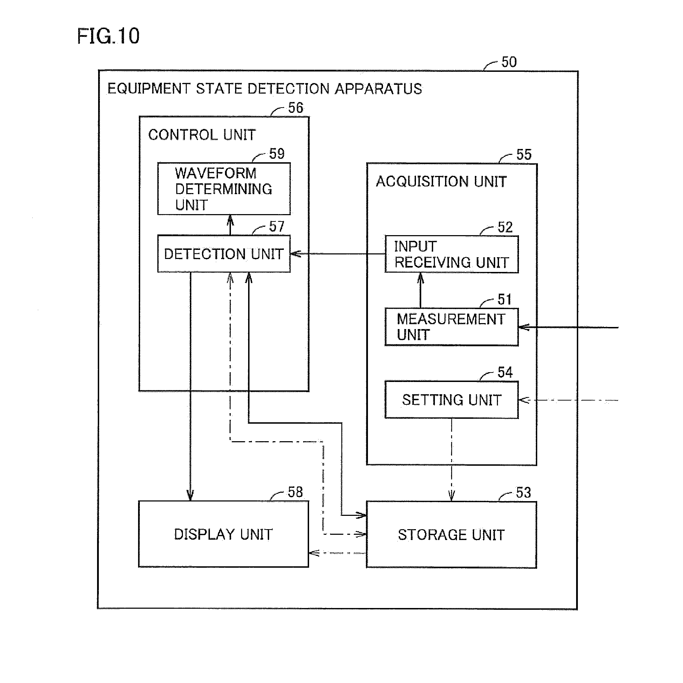

Moreover, in this case, a difference between the waveform in the first cycle and the waveform in the second cycle may be found to thereby determine whether or not the difference of the waveform is within a predetermined range. Fig. 10 is a block diagram showing a case where a waveform determining unit 59 is added to a control unit 56 in the equipment state detection apparatus 50 shown in the embodiment in Fig. 6. Since configurations other than the waveform determining unit 59 are similar to those in Fig. 6, the same reference numerals are given and descriptions thereof are omitted. The waveform determining unit 59 determines whether or not the difference of the waveform is within the predetermined range. The waveform determining unit 59 is actuated as the determination means. For example, the waveform determining unit 59 may calculate a maximum value and a minimum value of the power consumption every cycle, by which it may be determined whether or not at least any one value of the maximum value and the minimum value of the power consumption exceeds predetermined electric energy. An average value of the power consumption may be calculated every cycle to thereby compare the average value in the first cycle and the average value in the second cycle and determine whether or not the average values are the same. A ratio between the operating state and the standby state may be calculated every cycle to thereby determine whether or not the ratio is a constant value. For example, elapsed times of the standby a and the operating a in Fig. 9 may be calculated to thereby calculate a ratio A between the time of the standby a and the time of operating a. Moreover, elapsed times of the standby b and the operating b in Fig. 9 may be calculated to thereby calculate a ratio B between the time of the standby b and the time of operating b. It may be determined whether or not the ratio A and the ratio B are a constant value.

Only the waveform of the operating state may be determined. That is, the waveform in the operating a of the first cycle and the waveform in the operating b of the second cycle in Fig. 9 may be compared to determine whether or not the waveforms are the same. This enables damage and abrasion of the press machine 9 when the press machine 9 is in the operating state, change in situation to the press machine 9 unintended to the user using the press machine 9 or the like to be detected with ease.

Moreover, while the case where in one cycle, the standby state and the operating state shift periodically with the first threshold and the second threshold used as references has been described, for example, the states may shift with the maximum value of the power consumption used as a reference.

While in the embodiment, the case where the first threshold w₀ is 0.4 kw, and the second threshold w₁ is 0.7 kw has been described, the present invention is not limited thereto, and for example, when the equipment state detection apparatus 50 is applied to the press machine 9, a test or the like may be conducted in advance, so that appropriate values for the press machine 9 may be used.

Moreover, while in the embodiment, as the threshold, the case where the two types of thresholds of the first threshold and the second threshold are provided has been described, the present invention is not limited thereto, and for example, three or four types of thresholds may be provided in accordance with the operation state of the press machine 9.

Moreover, the present invention is not limited to the thresholds, but statistics of an RMS (Root Mean Square) value, a waveform pattern such as, Skewness, Flatness and the like may be utilized, or a specific power spectrum may be utilized for detection.

Moreover, when the machining of the plate material 20 is started by the press part 21, inrush power may be caused. Such a noise may be removed to detect the operation state. For example, if the measured power consumption is the inrush power, the data of the power consumption while the inrush power is caused is not used, but the data of the power consumption after the inrush power has disappeared is used.

While in the embodiment, the case where the timing when the measurement of the power consumption starts is the timing when the press machine 9 is powered on has been described, the present invention is not limited thereto, and for example, the measurement may be started before the press machine 9 is powered on.

Moreover, while in the embodiment, the case where the measurement of the power consumption is performed at the intervals of 1 second has been described, the present invention is not limited thereto, but the measurement may be performed at intervals smaller than 1 second, and thus, setting can be arbitrarily made. The interval may be varied in accordance with the operation state.

Moreover, while in the embodiment, the case where the power consumption of the press machine 9 is measured has been described, the present invention is not limited thereto, but a physical amount varying in accordance with the operation state of the press machine 9 may be measured. For example, a current value may be measured.

Moreover, statistics converted based on the physical amount may be used to detect the operation state of the press machine 9. This enables the operation state of the equipment to be detected, based on the various types of data. As the statistics, for example, a time average value, the RMS value, a short-time power spectrum value or the like can be employed.

Moreover, while in the embodiment, the case where the real-time power consumption of the press machine 9 is measured has been described, the present invention is not limited thereto, but using the measured power consumption, an integrated value of electric power consumed within predetermined time such as, for example, 5 minutes may be found to compare the integrated value of electric power with a predetermined threshold and detect the operation state of the press machine 9.

While in the embodiment, the case where the display unit 58 displays the data of the power consumption through the control unit 56 has been described, the present invention is not limited thereto, but the measured data may be notified directly to the display unit 58 from the measurement unit 51 to thereby display the data. Moreover, if not necessary to the user, the display unit 58 need not display the data.

While in the embodiment, the case where when the first threshold and the second threshold are set, the data is directly notified to the storage unit 53 from the setting unit 54 has been described, the present invention is not limited thereto, and for example, the data may be notified through the control unit 56.

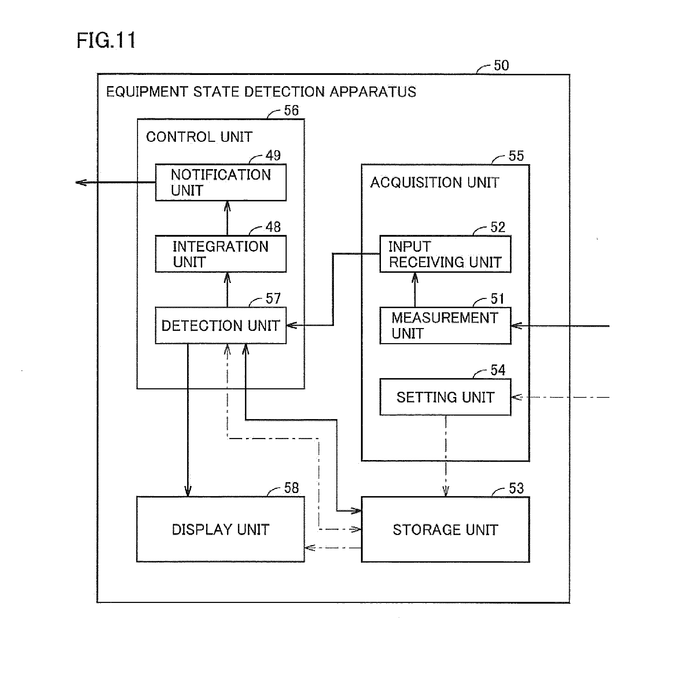

The equipment state detection apparatus 50 may consolidate the operation state of the equipment to notify the collected operation state at predetermined timing to the server 36 through the hub 35. The predetermined timing is, for example, a predetermined time interval, an operation cycle of the equipment or the like, which is arbitrary timing in accordance with the convenience of the user such as an equipment administer and the like. This enables the operation state of the equipment to be notified in accordance with the convenience of the user. Fig. 11 is a block diagram showing a case where a notification unit 49 and a integration unit 48 are added to the control unit 56 in the equipment state detection apparatus 50 shown in the embodiment in Fig. 6. Since configurations other than the notification unit 49 and the integration unit 48 are similar to those in Fig. 6, the same reference numerals are given, and descriptions thereof are omitted. The notification unit 49 is connected to a network or the like to notify the operation state of the equipment detected by the equipment state detection apparatus 50 outside. The integration unit 48 collects the data of the operation state of the equipment.

Specifically, when the operating state lasts for 10 minutes and then, the state shifts to the non-operating state, the end of the operating state lasting for 10 minutes is notified at timing when the operating state ends in place of notifying the operating state every minute. That is, the collection of the operating state of the equipment is to collectively notify the operating state for ten minutes once in place of notifying the operating state every minute, if the operating state lasts for 10 minutes. Accordingly, the integration unit 48 integrates a plurality of notifications into one. This can suppress an amount of data communicated to the server 36. Here, the integration unit 48 is actuated as integration means, and notification unit 49 is actuated as notification means.

The notification of the operation state of the equipment to the server 36 is not limited to the data based on the power consumption, but may include data based on the signals such as the start signal, the end signal and the like.

While in the embodiment, the case where the equipment state detection apparatus 50 is connected to the server 36 through the hub 35 has been described, an equipment state detection system including the equipment state detection apparatus and server may be employed. In this case, for example, as the data notified to the server, the operation state may be notified, or the above-described integrated value of electric power may be notified in accordance with the communication state or the like.

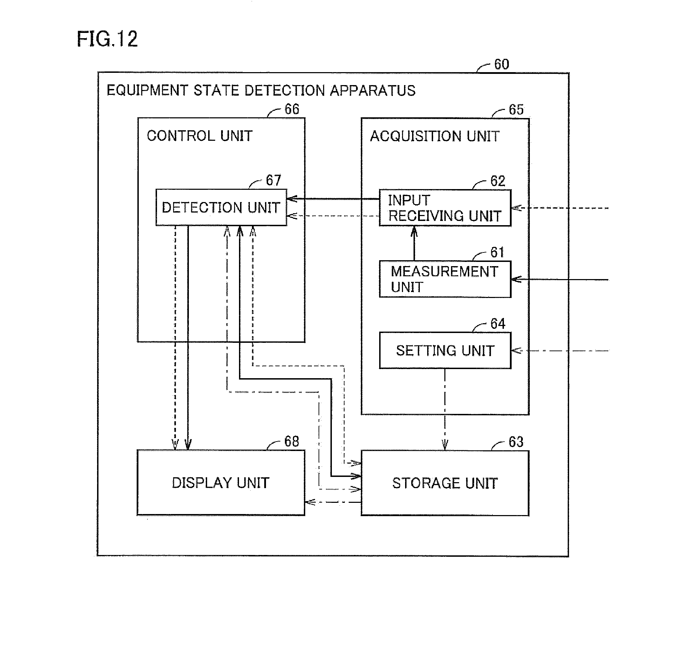

While in the above-described two embodiments, that is, the embodiment in which the signals are used as shown in Figs. 2 to 5, and the embodiment in which the electric energy is measured as shown in Figs. 6 to 9 may be carried out individually or in combination. That is, the detection needs to be neither based on only the change of the state signal outputted from the equipment, nor based on only the data of the power consumption. Fig. 12 is a block diagram showing a configuration of an equipment state detection apparatus 60 that uses the signal and measures the electric energy. That is, the configuration of the equipment state detection apparatus 10 shown in Fig. 2 and the configuration of the equipment state detection apparatus 50 shown in Fig. 6 are combined. Dotted line arrows in Fig. 12 show a flow of the state signal, solid arrows show a flow of the data of the consumption power, and alternate long and short dashed line arrows show a flow of the signal in the operation received from the user.

In the case where the embodiments are carried out in combination, when detection results of the operation state differ, priority is given in advance to employ the high-priority result, or the respective results may be weighted in accordance with a job site or the like to thereby enable the result to be employed to be selected. In the embodiment where the signal is used as shown in Figs. 2 to 5, if the signal from the equipment cannot be acquired, such as in the case of failure in acquisition of the signal from the equipment, the electric energy may be measured as shown in Figs. 6 to 9 to detect the operation state of the equipment.

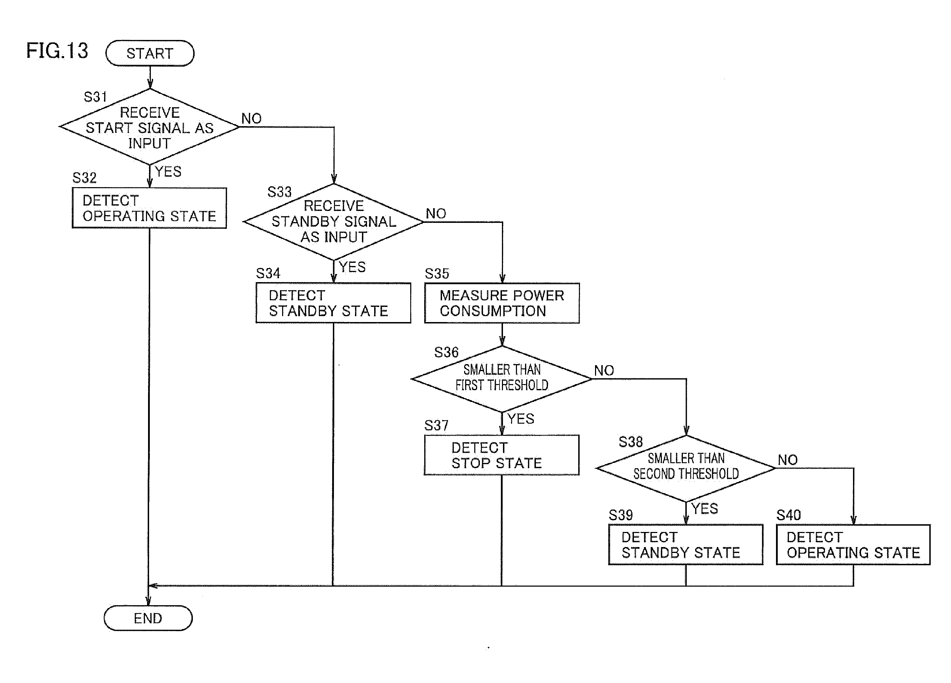

Fig. 13 is a flowchart showing a case where when the acquisition of the signal from the equipment is disabled, the electric energy is measured to detect the operation state of the equipment. Since S31 to S34 are similar to S11 to S14 in Fig. 4, descriptions thereof are omitted. For example, if after the equipment is powered on, an input receiving unit 62 does not receive the input of the start signal and the standby signal from the equipment (NO in S31, NO in S33), the power consumption is measured (S35).

Consequently, the input receiving unit 62 receives the input of the data of the measured power consumption. A detection unit 67 compares the data of the power consumption with the first threshold, and if it is determined that the data of the power consumption is smaller than the first threshold (YES in S36), the detection unit 67 detects that the operation state of the equipment is in the stop state (S37).

If in S36, the detection unit 67 determines that the data of the power consumption is larger than the first threshold (NO in S36), the detection unit 67 compares the data of the power consumption with the second threshold. If it is determined that the data of the power consumption is smaller than the second threshold (YES in S38), the operation state of the equipment is detected as the standby state (S39).

If in S38, the detection unit 67 determines that the data of the power consumption is larger than the second threshold (NO in S38), the detection unit 67 detects that the operation state of the equipment is in the operating state (S40).

This allows the operation state of the equipment to be easily detected, using the measured physical amount, even if the acquisition of the signal is disabled. Moreover, when the detection results of the operation state differ, the thresholds may be adjusted and so on.

This embodiment is not limited to the case where the signal from the equipment cannot be acquired, and for example, the signal from the equipment may be acquired at predetermined intervals of 1 second or the like, and the power consumption may be measured as well.

Since the equipment state detection apparatuses 10, 50, 60 can precisely detect the operation state of the equipment, the electric power consumed, for example, in the non-operating state can be reduced and so on, which can increase an operating rate of the equipment. For example, it can be understood that when the power consumption of the standby state is large, many plate materials 20 wait for the operation on the roller conveyer 26 before the press machine 9. In this case, predetermined countermeasures can be taken, which can reduce the wasteful power consumption. As a result, the electric power of the equipment can be saved.

Even when the equipment state detection apparatuses 10, 50, 60 are attached to existing equipment, the operating state of the equipment can be precisely detected and the electric power of the equipment can be saved.

While in the embodiments, the case where the equipment state detection apparatuses 10, 50, 60 are applied to the press machine 9 has been described, the present invention is not limited thereto, but can be applied to, any apparatus having a waveform, for example, a cardiac electrogram of an air flow, temperature, humidity or the like.

While in the embodiments, the case where the equipment state detection apparatuses 10, 50, 60 include the storage units 13, 53, 63, respectively has been described, the present invention is not limited thereto, but if the acquired state data need not be stored, and so on, they may not be provided.

Moreover, while in the embodiments, the case where the equipment state detection apparatuses 10, 50, 60 include the input receiving units 12, 52, 62, respectively has been described, the present invention is not limited thereto, but as in the embodiment shown in Figs. 6 to 12, if the data can be acquired directly from the measurement units 51, 61 by detecting the power consumption of the equipment or the like, and so on, they may be not provided.

While in the embodiments, the case where as the non-operating state, the stop state and the standby state are included has been described, the present invention is not limited thereto, but only the stop state may be included or only the standby state may be included.

The equipment state detection apparatuses 10, 50, 60 may include a buzzer or the like. This enables warning to be easily given, for example, when the standby state lasts, and so on.

While as described above, the embodiments of this invention have been described with reference to the drawings, this invention is not limited to the illustrated embodiments. Various amendments and modifications can be made to the illustrated embodiments within the same range as this invention or within a range equivalent thereto.

### Industrial Applicability

This invention is effectively utilized when the operation state of the equipment is detected.

### Reference Sings List

9: press machine, 10, 50, 60: equipment state detection apparatus, 11, 56, 66: control unit, 12, 52, 62: input receiving unit, 13, 53, 63: storage unit, 15, 54, 64: setting unit, 16, 55, 65: acquisition unit, 17,57,67: detection unit, 18, 58, 68: display unit, 51, 61: measurement unit, 20: plate material, 21: press part, 23: support part, 23a: depressed portion, 24: sensor, 25: control part, 26: roller conveyer, 35: hub, 36: server, 37: wattmeter, 48: collection unit, 49: notification unit, 59: waveform determining unit.

## Claims

1. An equipment state detection apparatus that can detect an operation state of equipment,
the operation state of the equipment having an operating state in which operation is being performed, and a non-operating state in which the work is not being performed,
the equipment state detection apparatus comprising:
acquisition means for acquiring real-time state data regarding the operation state of the equipment;
first detection means for detecting that the equipment is in the operating state, based on the state data acquired by the acquisition means; and
second detection means for detecting that the equipment is in the non-operating state, based on the state data acquired by the acquisition means.

2. The equipment state detection apparatus according to claim 1, wherein
the acquisition means includes a start signal receiving means for receiving input of a start signal outputted by the equipment when the work is started, and end signal receiving means for receiving input of an end signal outputted by the equipment when the work ends,
the first detection means detects that the equipment is in the operating state by the start signal received by the start signal receiving means, and
the second detection means detects that the equipment is in the non-operating state by the end signal received by the end signal receiving means.

3. The equipment state detection apparatus according to claim 2, wherein
the non-operating state includes a standby state in which the work stands by, and a stop state in which the work stops,
the end signal receiving means includes standby signal receiving means for receiving input of a standby signal outputted by the equipment when the work stands by, and stop signal receiving means for receiving input of a stop signal outputted by the equipment when the work stops, and
the second detection means detects that the equipment is in the standby state by the standby signal received by the standby signal receiving means, and detects that the equipment is in the stop state by the stop signal received by the stop signal receiving means.

4. The equipment state detection apparatus according to claim 2, wherein
the acquisition means includes measurement means for measuring a physical amount varying in accordance with the operation state of the equipment, and setting means for setting a predetermined threshold, and
when the detection means is disabled to acquire at least any one of the start signal and the end signal, the detection means compares the physical amount measured by the measurement means with the predetermined threshold set by the setting means to detect the operation state of the equipment.

5. The equipment state detection apparatus according to claim 1, wherein
the acquisition means includes measurement means for measuring a physical amount varying in accordance with the operation state of the equipment, and setting means for setting a predetermined threshold, and
the detection means compares the physical amount measured by the measurement means with the predetermined threshold set by the setting means to detect the operation state of the equipment.

6. The equipment state detection apparatus according to claim 5, wherein
the physical amount includes statistics converted based on the physical amount.

7. The equipment state detection apparatus according to claim 5, wherein
the physical amount varies periodically, and
the detection means includes determination means for comparing a waveform of a first cycle and a waveform of a second cycle different from the first cycle to determine whether or not a difference in waveform is within a predetermined range.

8. The equipment state detection apparatus according to claim 7, wherein
the detection means compares the waveform in the operating state in the waveform of the first cycle, and the waveform in the operating state in the waveform of the second cycle.

9. The equipment state detection apparatus according to claim 1, wherein
the equipment state detection apparatus can be connected to a server through a network, and
the equipment state detection apparatus includes:
integration means for collecting the operation state of the equipment detected by the detection means; and
notification means for notifying the operation state of the equipment collected by the integration means to the server at predetermined timing.

10. An equipment state detection method enabling an operation state of an equipment to be detected,
the operation state of the equipment having an operating state in which operation is being performed, and a non-operating state in which the work is not being performed,
the equipment state detection method comprising the steps of:
acquiring real-time state data regarding the operation state of the equipment;
detecting that the equipment is in the operating state, based on the acquired state data; and
detecting that the equipment is in the non-operating state, based on the acquired state date.

11. A computer-readable recording medium that records an equipment state detection program that causes a computer to be actuated as an equipment state detection apparatus that can detect an operation state of equipment,
the equipment state detection program causing the computer to execute the steps of:
acquiring real-time state data regarding the operation state of the equipment including an operating state in which operation is being performed, and a non-operating state in which the work is not being performed;
detecting that the equipment is in the operating state, based on the acquired state data; and
detecting that the equipment is in the non-operating state, based on the acquired state data.
